Europäisches Patentamt

European Patent Office

Office européen des brevets

(19)

(11) Numéro de publication: **0 186 583**

**A2**

(12) **DEMANDE DE BREVET EUROPEEN**

(21) Numéro de dépôt: 85402526.9

(51) Int. Cl.⁴: **A 23 L 1/39**

(22) Date de dépôt: 18.12.85

(30) Priorité: 21.12.84 FR 8419716

(43) Date de publication de la demande:
02.07.86 Bulletin 86/27

(84) Etats contractants désignés:
**BE DE NL SE**

(71) Demandeur: **Gicquel, Michel**

**F-35600 Sainte Marie de Redon(FR)**

(72) Inventeur: **Gicquel, Michel**

**F-35600 Sainte Marie de Redon(FR)**

(74) Mandataire: **Tanguy, Gilbert André**
**SOCIETE INTERNATIONALE 19, rue de la Paix**
**75002 Paris(FR)**

(54) Compositions alimentaires à base de beurre.

(57) L'invention concerne une composition alimentaire présentant une longue durée de conservation et comprenant du beurre, du vinaigre blanc, éventuellement associé à un vin blanc sec et un produit choisi parmi l'échalotte, l'oseille, le basilic et l'estragon. Cette composition renferme en outre un produit choisi parmi les farines de céréales, les amidons de céréales, les sels comestibles, les sucres, les matières grasses, les agents de sapidité, du glutamate de sodium, les oignons, les extraits végétaux physiologiquement compatibles, les condiments, les dextrines et leurs mélanges, de l'eau étant également incorporée dans ce produit en quantité suffisante.

COMPOSITIONS ALIMENTAIRES A BASE DE BEURRE

La présente invention est du domaine de l'industrie alimentaire. Elle vise plus précisément de nouvelles compositions alimentaires à base de beurre, telles que par exemple les produits ou sauces du type beurre blanc, sauce au beurre à l'oseille, au basilic ou à l'estragon.

Jusqu'à présent, les produits du type sauces énumérés ci-dessus étaient préparés de façon extemporanée par les cuisiniers avant d'être associés au plats alimentaires auxquels ils étaient destinés. Cette préparation extemporanée était due au fait que de tels produits ou sauces sont par nature instables, en présentant des durée de conservation relativement faible, qui interdisent leur stockage et leur distribution et/ou utilisation ultérieure.

La présente invention a pour objet d'obvier aux inconvénients de ces produits ou sauces de l'art antérieur, en les transformant en une composition stable, qui conserve le même aspect et la même saveur que la sauce d'origine, permettant ainsi de les stocker, de les mettre en conserve et de les commercialiser dans le temps à volonté. Il s'agit en fait de compositions nouvelles constituant des produits industriels originaux, et susceptibles d'être distribués sur une grande échelle.

La présente invention a donc pour objet une nouvelle composition alimentaire constituée par du beurre, du vinaigre blanc et un produit choisi parmi l'échalotte, l'oseille, le basilic et l'estragon, cette composition étant en outre caractérisée en ce qu'elle renferme un produit choisi parmi les farines de céréales, les amidons de céréales, les sels comestibles, les sucres, les matières grasses, les agents de sapidité, le glutamate de sodium, les oignons, les extraits végétaux physiologiquement compatibles, les condiments, les dextrines, de l'eau étant également ajoutée en quantité suffisante.

Selon une composition alimentaire plus particulièrement préférée de l'invention, notamment destinée à obtenir, à partir d'un produit bien connu sous le nom de "beurre blanc du pays nantais", une composition qui, tout en conservant le même aspect et la même nature que ledit beurre blanc classique, peut se conserver sur une longue période de temps, on opère de la manière suivante :

Dans un malaxeur, on mélange 2 g de sel de cuisine, 20 g d'échalotte, le produit réduit obtenu à partir de 500 g de vinaigre et de 50 g de gros-plant, 750 g de beurre demi-sel, après quoi l'on ajoute au mélange ainsi obtenu 150 g d'un produit à base de farine de céréales, d'amidon de maïs, de sel, de lactose, de matières grasses, d'agent de sapidité, de

2       **0186583**

glutamate de sodium, d'extraits végéfaux comestibles, de condiments et de malto-dextrine, en ajoutant également de l'eau en quantité suffisante.

On obtient ainsi 2.420 g d'une composition alimentaire renfermant 31 % de beurre et 62 % d'eau, le restant étant constitué par le mélange des adjuvants mentionnés ci-dessus (7 %).

Il est clair que l'invention n'est nullement limitée à la recette spécifiée ci-dessus, mais que l'on pourrait obtenir également une composition alimentaire de longue conservation, en remplaçant dans la sauce au beurre les échalottes par de l'oseille, du basilic ou de l'estragon.

REVENDICATIONS

1.    Une composition alimentaire présentant une longue durée de conservation et comprenant du beurre, du vinaigre blanc, éventuellement associé à un vin blanc sec et un produit choisi parmi les matières grasses, les farines de céréales, les sels comestibles, l'échalotte, l'oseille, le basilic et l'estragon, caractérisée en ce qu'elle renferme en outre au moins un produit choisi parmi les sucres, les agents de sapidité, le glutamate de sodium, les oignons, les extraits végétaux physiologiquement compatibles, les condiments, les dextrines et leurs mélanges, de l'eau étant également incorporée dans ce produit en quantité suffisante.

2.    Composition alimentaire présentant l'aspect et la saveur du produit appelé communément "beurre blanc du pays nantais", comprenant les ingrédients habituels d'un beurre blanc, c'est-à-dire du sel, de l'écha-lotte, un produit réduit à base de vinaigre et de vin blanc sec et de beurre demi-sel, ainsi qu'au moins un produit choisi parmi les farines de céréales, l'amidon de maïs, les sels comestibles, les matières grasses, les oignons, environ 7 % d'un produit constitué en tout ou en partie par du lactose, des agents de sapidité, du glutamate de sodium, des extraits végétaux, des condiments, de la malto-dextrine ou leurs mélanges, ainsi qu'une quantité suffisante d'eau.

3.    Composition selon la revendication 2, caractérisée en ce qu'elle renferme 7 % d'un produit constitué en tout ou en partie par le glutamate de sodium, le lactose et la malto-dextrine.